# EUROPEAN PATENT SPECIFICATION

(11) **EP 4 432 094 B1**
(45) Date of publication and mention of the grant of the patent: **04.02.2026**
(21) Application number: 24163674.5
(22) Date of filing: 14.03.2024
(51) Int. Cl.: G06F 11/34, G06F 21/52, G06F 11/32, G06F 11/30

(54) **APPLICATION FLOW RECOGNITION IN MANAGED SERVERLESS APPLICATIONS**
ANWENDUNGSFLUSSERKENNUNG IN VERWALTETEN SERVERLOSEN ANWENDUNGEN
RECONNAISSANCE DE FLUX D'APPLICATIONS DANS DES APPLICATIONS SANS SERVEUR GÉRÉES

(30) Priority: 14.03.2023 IL 30138423
(43) Date of publication of application: 18.09.2024
(73) Proprietor: Deutsche Telekom AG, 53113 Bonn (DE)
(72) Inventor: Ashkenazi, Adi, 6097200 Yakum (IL); Elyashar, Aviad, 8474915 Beer sheva (IL); Mimran, David, 6215505 Tel Aviv (IL); Elovici, Yuval, 7986400 Arugot (IL); Shabtai, Asaf, 7684200 Hulda (IL); Brodt, Oleg, 8471621 Beer Sheva (IL); Lehman, Heiko, 12587 Berlin (DE)
(74) Representative: Graf von Stosch Patentanwaltsgesellschaft mbH

(56) References cited:
- US-A1- 2020 128 047
- LIN WEI-TSUNG ET AL: "Tracking Causal Order in AWS Lambda Applications", 2018 IEEE INTERNATIONAL CONFERENCE ON CLOUD ENGINEERING (IC2E), IEEE, 17 April 2018 (2018-04-17), pages 50 - 60, XP033340499, DOI: 10.1109/IC2E.2018.00027

## Description

### Field of Invention

The present invention relates to the field of cyber security. More particularly, the invention relates to a graph-based method for application flows recognition, based on managed serverless activity logs.

### Background for the Invention

The use of cloud-based environments in computing and particularly, in serverless computing, has grown dramatically in recent years [12, 14, 29]. Serverless computing provides automatic scaling features, built-in high availability, and a pay-for-use billing model that supports agility and cost optimization [18]. This allows developers to deal almost exclusively with application logic, rather than handling infrastructure management tasks, such as capacity provisioning and patching.

Current serverless applications use the Function as a Service (FaaS) model, which is capable of executing many atomic low-level functions that interact with each other via native APIs of the cloud provider [28]. Such functions are initiated and halted frequently during the application runtime, to reflect the business logic invoked by the user and other system components.

A significant benefit of serverless computing environments is the high level of control and monitoring, and the high granularity logging that the computational cloud provider offers and manages. In contrast to a monolithic application (in which the logging mechanism is performed according to the developers' decision), the serverless application's unique architecture increases the visibility of internal events between low-level functions and resources in a standardized manner [6]. The serverless application's default logs can capture information about the execution of serverless functions, including data access, errors, or exceptions during runtime.

Alongside the advantages of serverless applications, there are also a number of potential risks, due to the fact that in a serverless architecture the underlying infrastructure is managed by a cloud provider, which means that the application developer has less control over the security of the infrastructure. This can make it more difficult to implement and enforce security policies, and can also introduce new vulnerabilities, such as the potential data breaches or malicious attacks on the serverless functions themselves. Additionally, serverless architectures can make security incidents more difficult to monitor and detect, since the functions are typically ephemeral and the underlying infrastructure is abstracted away [7].

In addition to serverless security challenges, there are also challenges associated with security operations management. Since serverless architecture includes many isolated entities, analyzing incidents and pinpointing potential security risks becomes more complex, as raw data logs do not allow a complete understanding of the application's behavior and the executed application-level logic. In such an environment, it is difficult for security teams (or third-party security service providers) who are unfamiliar with the application's structure, to quickly derive meaningful operational information about the application when handling an incident [6]. Since Security Operations Centers (SOC) are expensive and complex, companies outsource the monitoring and threat intelligence gathering, to third-party managed security service providers (MSSPs) [8].

Access to the raw data logs by third party entities (e.g., MSSP subcontractors) or potential attackers may be problematic, since valuable information can be inferred or leaked from these logs. This valuable information can be misused and compromise the security and privacy of the application owner.

### Serverless Computing Security

Cloud computing has become an essential management and operations tool for most technology companies [2], [3]. Serverless computing is one of the most advanced abstractions of cloud infrastructure. It highlights the benefits of cloud computing by allowing developers to focus on the logic of their applications instead of maintaining configurations and server-side management while the computational cloud provider is responsible for managing, scaling, and providing different resources to ensure that these functions run smoothly [1], [12]. Despite its many benefits, serverless computing is still developing, and security concerns have not yet been addressed.

The following are some of the security threats associated with serverless computing:
Over-privileged functions: Serverless provides the ability to give privileges to individual functions, but such privileges must be limited to the smallest scope possible. As a result, many developers grant over-privileged permissions that are too high unnecessarily, which makes many functions vulnerable to hacking [13]. No direct interaction and flow of information between functions: The majority of applications rely on other services to transfer control from one function to another. To safely transfer arbitrary data between functions or requests, one should use storage services, which can be a potential point of attack [14]. There are additional security issues that are described in the Cloud Security Alliance report [15]; these include function event data injection, broken authentication, and insecure application secrets storage.

Several attempts were made to solve these problems: Alpernas et al. [16] created the Trapeze architecture, an approach for securing serverless systems using dynamic information flow control (IFC) to monitor and track the system by monitoring inputs and outputs of all of the functions. Obetz et al. [17] proposed a static analysis technique using call graphs that utilizes information about relationships between serverless functions and the platform services with which they interact. Datta et al. [18] presented the Valve, a platform for dynamic information flow control, which uses networklevel tainting to monitor functions activity and detect attacks, in order to ensure control flow integrity. The SecLambda security framework, presented by Jegan et al. [14], leverages the local function state and global application state to perform sophisticated security tasks aimed at protecting an application in a serverless environment. The authors provided three tasks: flow integrity, credential protection, and DoS rate limiting. Sankaran et al. [19] proposed the WILL.IAM, workflow aware access control model to secure serverless applications. The model aims to enable developers to specify permissible transitions of workflows, using policies they build, aligned to AWS IAM permissions.

"Tracking Causal Order in AWS Lambda Applications" (Lin Wei-Tsung et., 2018 IEEE International Conference on Cloud Engineering, pages 50-60) discloses a design and implementation of a cloud service that extracts causal dependencies across functions and through cloud services, without programmer intervention. Causal precedence are extracted for Lambda applications by monitoring both function-internal events and the message-passing performed by functions through AWS cloud services. However, this design constructs a service graph using the causal order and performance data from events across an application, and therefore, is incapable of identifying overlapping nodes in the graph, to refine communities.

However, the above solutions are designed for non-managed serverless environments, where the organization manages the infrastructure itself, giving them more control in detecting cyberattacks on serverless applications

It is therefore an object of the present invention to provide an infrastructure for inferring the structure of an application.

It is another object of the present invention to provide an infrastructure for the recognition of application flows.

Other objects and advantages of the invention will become apparent as the description proceeds.

### Summary of the Invention

A method for automatically recognizing the structure and the flows of an application, according to which data is collected from managed serverless activity logs of a computational cloud provider configured to provide on-demand computing resources using distributed servers and then, an event-based graph is constructed, based on the activity logs, such that each node in the graph represents an entity of the application and each edge in the event-based graph represents an event being an interaction between entities or nodes. Application flows are recognized in the applications, based on the event-based graph and overlaps between the application flows are identified, based on the event-based graph characteristics.

Monitoring services (e.g., CloudWatch and CloudTrail), available in the AWS cloud, may be used for observing the activities performed by the application.

In one aspect, community detection algorithms are configured e to identify groups of nodes that are closely linked, based on interactions or similarities between them.

In another aspect, the recognition of application flows and their entities are refined using graph-theory centrality measures (including degree, closeness, and betweenness centrality) to detect overlapping application flows.

The nodes represent an individual user or a resource, and the edge represents interaction or relationship among them.

The managed serverless activity logs that are collected from the computational cloud provider may describe entities, which are functions and resources and events of interactions between the entities.

A preprocessing step may be performed, that includes the extraction of the source and target service for each event and the type of operation performed by the source.

The application activities may be reconstructed by constructing a directed weighted graph using the activity logs, by linking entities, based on their interactions.

The nodes may be sorted according to their centrality value in descending order.

In one aspect, all the neighbors and their communities of each central node may be collected and each central node may be added to the neighbors' communities.

A system for automatically recognizing the structure and flows of an application, comprising:
a) a computational cloud provider configured to provide on-demand computing resources using distributed servers;
b) a computerized device having at least one processor and operating software, being adapted to:
   b.1) collect data from managed serverless activity logs of a computational cloud provider configured to provide on-demand computing resources using distributed servers;
   b.2) construct an event-based graph, based on the activity logs, where each node in the event-based graph represents an entity of the application and each edge in the event-based graph represents an event being an interaction between entities or nodes;
   b.3) recognize application flows in the application, based on the event-based graph; and
   b.4) identify overlaps between the application flows, based on the event-based graph characteristics.

### Brief Description of the Drawings

The above and other characteristics and advantages of the invention will be better understood through the following illustrative and non-limitative detailed description of preferred embodiments thereof, with reference to the appended drawings, wherein:
- Fig. 1 illustrates the steps performed for application flows recognition, according to an embodiment of the invention;
- Fig. 2 is an example of graph construction and overlapping community detection, which illustrates the effects of each step on a given application;
- Fig. 3 illustrates an Airline Booking application graph and disjoint community detection partition using the Louvain algorithm; and.
- Fig. 4 illustrates an Airline Booking application high-level architecture and the graph that was constructed, according to an embodiment of the invention.

### Detailed Description of the Invention

The present invention provides a graph-based method for application flows recognition from managed serverless activity logs (an activity log is a computer-generated record of events and changes that happen on a system). The method utilizes activity logs containing events associated with low-level operations between functions and resources. The activity logs are standard logs provided by the computational cloud provider monitoring tools that reflected the application behavior. The inactivity logs are produced without adding logging and operational overhead. The proposed method is automatic and does not rely on developers' manual intervention. The present invention also provides a system for application flows recognition from managed serverless activity logs, using a computerized device with at least one processor and operating software, which is adapted to perform the following steps:
At the first step, an event-based graph (a graphical representation of a system, based on the events that progress the system state with nodes and directed edges) is constructed, based on the activity logs that are collected from the computational cloud provider (an IT company that provides on-demand, scalable computing resources like computing power, data storage, or applications over the internet). Each node in the graph represents an entity of the application, (i.e., a function or resource, such as a table or a bucket)). Each edge in the graph represents an event (e.g., invocation, read, write operations) between the nodes.

At the next step, application flows in the applications are recognized, based on the event-based graph (an application flow is a set of functions and resources which share common interaction patterns across multiple executions of an application, representing a logical process or a functional unit within a larger application). At the next step, overlaps between the application flows are identified, based on the event-based graph characteristics.

The present invention utilizes two main monitoring services available in the AWS cloud for observing the activities performed by the application (monitoring tools with the same capabilities are available on other computational cloud providers such as Azure and Google Cloud):
CloudWatch: The service provides data and actionable insights on applications' performance and resource utilization. CloudWatch collects monitoring and operational data in the form of activity logs, metrics, and events. The activity logs contain events, each event has two cloud resources and one operation between them.

CloudTrail: The service provides activity logs for every API call (i.e., event) in the cloud environment between the cloud services. These API calls might be a create, read, update, delete (CRUD) operation on a table in a database, an invocation of a Lambda function, etc. The trail contains data associated with the application's resources (e.g., S3, Lambda, and DynamoDB) and needed to create manually.

### Community Detection

In the method of the present invention uses a community detection algorithm to identify groups of nodes in the constructed graph (community detection algorithms, also known as graph clustering, are a group of algorithms designed for network analysis, which rely on the connection between the nodes as a single attribute type. The algorithms aim to identify groups of nodes that are closely linked, based on interactions or similarities between them). For a given graph, represented by G = (V,E) where V is the set of nodes and E is the set of edges, the community detection finds a community structure, which is the partition of the nodes in V in the form of P = C1,C2,...,Ck, such that each Ci,1 ≤ i ≤ k exhibits the community structure that presents groups of nodes' so-called communities. The nodes can represent an individual user or a resource, and the edge can represent interaction or relationship among them [9], [10]. In the method of the present invention, the Louvain algorithm [11] is used, which utilized the modularity measure of community strength, which quantifies the quality of an assignment of nodes to communities.

The present invention provides a generic method for the automatic discovery of application flows in managed serverless applications. The discovery of application flows is crucial for improving the understanding of the structure of serverless applications and their associated entities (functions and resources) interactions by using logical connections. The present invention utilizes the raw default activity logs provided by the computational cloud provider, which reflect interactions (i.e., events) between entities in the application. Accordingly, the continuous interactions between entities are transformed into a graph that represents the application's activity. Using a community detection algorithm, entities are grouped to discover the main application flows in a given application. In order to refine the recognition of an application's main application flows and their entities, graph-theory centrality measures (centrality is a concept in graph analytics that deals with distinguishing important nodes in a graph and recognizes nodes that are important or central among the whole list of other nodes in a graph. Centrality offers all the relevant analytical information regarding that node and the graph from which the conclusion can be derived. The different perspectives of a particular node are studied under different indices, which are collectively known as centrality measures) are utilized to detect overlapping application flows.

Since the proposed method is generic, it can be used by any platform that offers serverless computing services. In this example, the method has been applied to the AWS Lambda serverless computing platform.

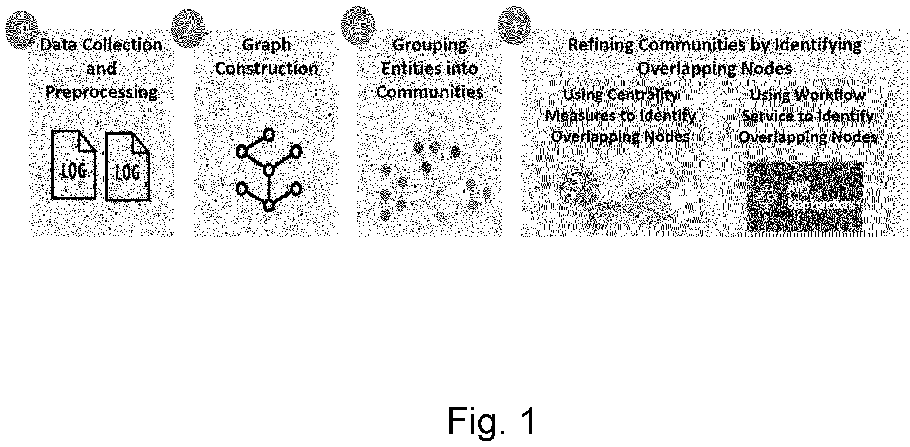

Fig. 1 illustrates the steps performed for application flows recognition: data collection and preprocessing, graph construction, grouping entities into communities, and refining communities by identifying overlapping nodes.

### Data Collection and Preprocessing

In this step, raw activity logs are collected from the computational cloud provider's default monitoring tools. These activity logs describe entities, which are functions (e.g., Lambda) and resources (e.g., DynamoDB tables, S3 buckets) and events of interactions between those entities (e.g., Lambda function invocations and create, read, update, and delete operations on databases) used by the application. The preprocessing step includes the extraction of the source and target service for each event and the type of operation performed by the source. For example, in an event of a Lambda function that retrieves data from a DynamoDB table, the source is the "userldentity principalld" field (representing the name of the Lambda function), the target is the "requestParameters tableName" field (representing the name of the DynamoDB table), and "Getltem" is the operation (event name) performed.

### Graph Construction

To reconstruct the application activities, a directed weighted graph (a graph with edges being arrows that show path direction, where weights are assigned to each edge) is constructed using the activity logs, by linking entities (functions and resources) based on their interactions. The directed weighted graph is given by *G* = (*V,E*)*, W : E* → N, where *V* is a set of entities and *E* is a set of directed edges between these entities. These directed edges represent the interactions performed between two entities. Each edge (*u,v*) ∈ *V* has a weight *w*(*u,v*) that represents the number of interactions executed between two entities (*u* and *v*).

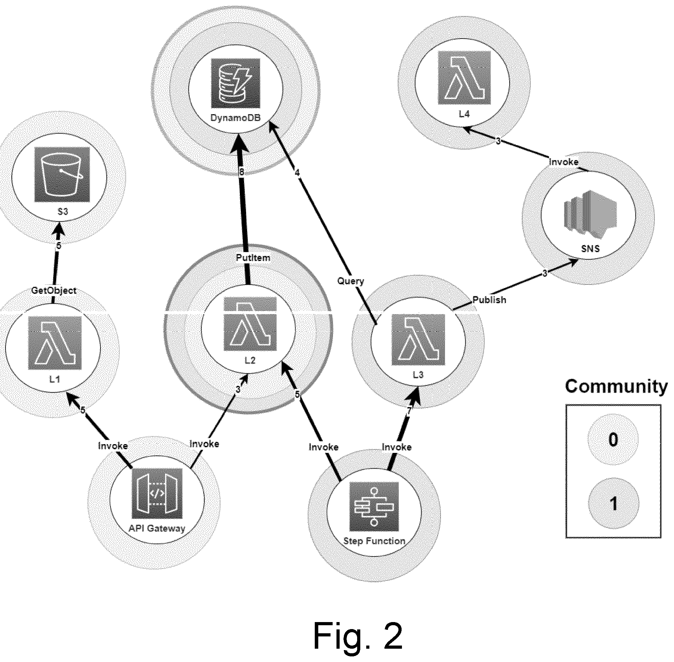

Fig. 2 is an example of graph construction and overlapping community detection, which illustrates the effects of each step on a given application. The following interactions are depicted by assuming AWS logs collected from a serverless application:
a) The requests through the API gateway invoke five and three times the L1 and L2 Lambda functions, respectively;
b) The step function invokes seven times and five times for L3 and L2 lambda functions, respectively;
   The L1 lambda function applies five getObject events on the S3 bucket;
   The L2 lambda function applies three putltem events on the DynamoDB table;
   The L3 lambda function queries the DynamoDB table four times;
   The L3 lambda function applies three Publish events on the SNS topic;
   The requests through the SNS topic invoke three times the L4 Lambda function.

Based on this example, a directed weighted graph is constructed. The graph consists of nine nodes and nine edges (Fig. 2).

### Grouping Entities into Communities

We apply a community detection algorithm (e.g., Louvain [11], Grivan-Newman [24]) to group entities into communities, based on their interactions. The entities associated with a disjoint community represent an application flow in the constructed graph. At the end of this step, *C* = *c*₁*,c*₂,*...,cₖ,* is obtained, where *C* is a set of disjoint communities and k ranges from one to |*V* | nodes. Each community *cᵢ* consists of one to |*V* | distinct nodes.

In the example presented in Fig. 2, after applying a community detection algorithm in this step, two raw communities were discovered. The first community (in yellow) consists of four nodes: the API Gateway, L1 Lambda function, L2 Lambda function, and S3 bucket, whereas the second community (in blue) includes five nodes: the step function, L3 Lambda function, L4 Lambda function, SNS topic, and DynamoDB table.

### Refining Communities by Identifying Overlapping Nodes

The use of community detection algorithms on the constructed graph produces a set of disjoint communities composed of serverless entities (functions and resources). However, there are many serverless applications, in which some of the entities are involved in more than a single application flow. Therefore, in order to improve the recognition of application flows in such complex applications, entities (i.e., nodes in the graph) participating in multiple application flows are identified.

### Using Centrality Measures to Identify Overlapping

First, central nodes are searched in the constructed graph to recognize potential overlapping entities. Central nodes are important components in the graph, since many entities interact with them, making them likely candidates for participating in multiple communities (i.e., application flows).

In order to detect central nodes, three different centrality measures are applied: degree, closeness, and betweenness centrality. Each centrality measure contributes its perspective to identify central nodes in a given graph. The *degree centrality* defines the importance of a node based on the number of edges connected to the given node [25]. The *closeness centrality* identifies a node's importance based on how close it is to all the other nodes in the graph [25] and is based on the total geodesic distance from a given node to all other nodes.

The geodesic distance between two nodes is the number of edges of the shortest path between the nodes. The *betweenness centrality* defines the importance of a node based on the number of times it occurs in the shortest paths between other nodes. The betweenness centrality measures the percentage of the shortest path in a network and where a particular node lies in it [25].

After computing the three centrality values for each node in the graph, the nodes are sorted according to their centrality value (the centrality value is the number of edges of a node, divided by the number of edges of the highest-degree node) in descending order. Then, the k - 1 nodes with the highest values are chosen, where k is the number of communities, and store these high-valued nodes detected by the three centrality measures.

Then, for each central node, all its neighbors and their communities are collected and each central node is added to the neighbors' communities.

In the example presented in Fig. 2, after applying the centrality measures in this step, the DynamoDB table was found to be a central node, since two Lambda functions (L2 and L3) interact with this storage resource. It can be seen that L2 is associated with Community 0 (yellow), whereas L3 is related to Community 1 (blue). Therefore, this central node (the DynamoDB table) is identified as an overlapping node. As a result, this table is associated with both communities rather than being associated solely with Community 1 (Fig. 2).

### Using Workflow Service to Identify Overlapping Nodes:

In order to identify additional overlapping nodes, we also focus on workflow orchestration services, such as AWS Step Function¹, Azure Logic Apps², and Google cloud Workflows.⁷ These services are used to orchestrate multiple serverless services in order to create an abstraction of business logic. The goal is to create and implement a business logic flow. In a single execution of a workflow, multiple functions are invoked. The workflow is responsible for a dedicated task, this implies that the step function and all of the Lambda functions invoked by it are related to the same business logic, and thus to the same application flows. As a result, we add these Lambda functions to the step function's community, based on the executions in the logs.

In the example of Fig. 2, the step function interacts with two Lambda functions: L2 and L3, and belongs to Community 1. The L3 Lambda function is already associated with Community 1, however, the L2 Lambda function is associated solely with Community 0. By performing this step, L2 is also added to Community 1.

### Testbed and Data Description

To analyze and evaluate the performance of the proposed method, an experimental serverless cloud environment was required.

To evaluate the performance of the present invention, a serverless evaluation testbed has been created in an AWS environment that contains two open-source serverless applications: Airline Booking and Video on Demand (VOD). The testbed comprises a simulator to activate those applications for a certain period of time to simulate legitimate user activity. The activity logs of those applications were collected using two AWS monitoring tools: CloudTrail and CloudWatch.

The testbed has been developed to: (1) cover several serverless development paradigms that utilize many types of serverless cloud services, and (2) generate a large amount of logging data through "real-life" activities.

### A. Testbed Applications

The testbed includes two applications, an Airline Booking application, and a VOD application, that were deployed using AWS. These applications were selected because they utilize a variety of AWS's serverless services, and cover two different approaches to serverless development. In the Airline Booking application, most of the Lambda functions have one specific use in the business logic, while the Lambda functions in the VOD application are more generic and can be used multiple times in different contexts (i.e., overlapping between application flows). The entire testbed is monitored by AWS CloudTrail and CloudWatch, and we used these monitoring tools to produce and collect the activity logs.

### Video On Demand (VOD) Application:

This application is based on "Video on Demand on AWS."³ from AWS solutions, a ready-to-deploy solution developed by Amazon. This VOD application converts videos stored in a designated S3 bucket into a streaming format and stores it in another bucket (including only the back-end side) written in JavaScript. The application contains four step functions which are responsible for four out of five main application flows of the application. Three of the step functions are part of the main flow that converts the format of the video files: (1) Ingest, which checks the file's validity, (2) Process, which changes the file from regular video file coding to a different type of coding using the AWS Elemental MediaConvert service, and (3) Publish, which creates a link to the file's location in the cloud and sends it by mail using AWS SQS. In addition the (4) Mailing flow, a service that uses AWS SES (Simple Mailing service, a flexible service that enables developers to send mail from within any application), to insert mail into the S3 bucket and process it. There are two ways of interacting with the application: by manually uploading the files to the source S3 bucket or by sending an email to a predefined mail endpoint. Once the file arrives at the source S3 bucket, the remainder of the flow is performed automatically via EventBridge triggers and step functions. (5) Logging, a time-based trigger event that collects application usage statistics and writes them to an S3 bucket (similarly to the back office process in the airline application).

### Airline Booking Application:

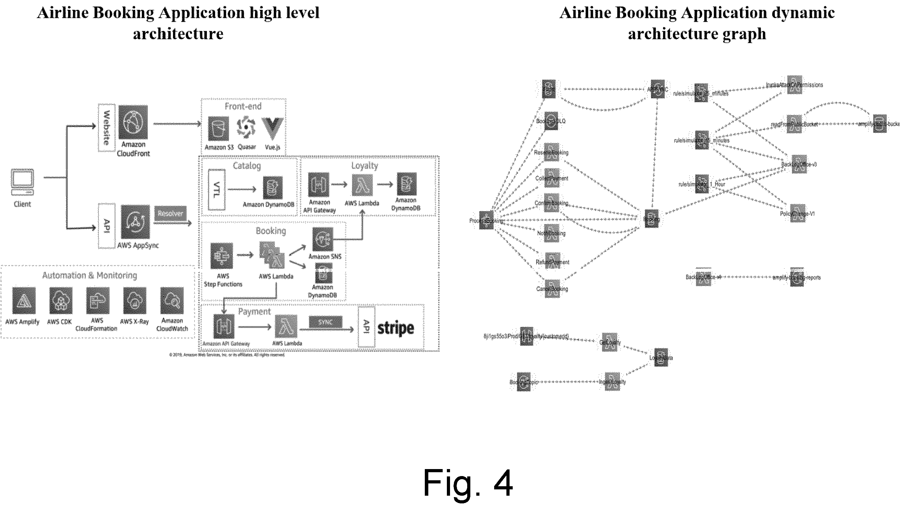

This application is based on "AWS-serverless-airline-booking"⁴ and deployed through AWS Amplify. Its front-end web server was developed in Vue js, and the backend was developed in JavaScript and Python. The application contains multiple REST API endpoints that allow users to interact with it. It contains a variety of AWS services: four DynamoDB tables, four S3 buckets, SQS and SNS services (queue and notifications services), the Appsync API service, and 12 Lambda functions. Some of the Lambda functions are orchestrated using the AWS Step Function service. The main application flows in the airline application can be divided into four groups: (1) Loyalty, an API request that retrieves information from a DynamoDB table and presents the data to the user (e.g., the current balance of points in the loyalty account); (2) Catalog, an API request that retrieves information on flights from a DynamoDB table and presents the data to the user. These types of events are brief and contain one access to a data source at a time. (3) Booking, an API request for flight booking, which triggers a series of data accesses and Lambda invocations. This series of events is orchestrated by a step function. (4) Logging, time-based trigger events that collect statistics on the application and write them to an S3 bucket, based on the AWS EventBridge service. An example of such a Lambda is the back office Lambda which logs recent bookings every hour. Fig. 4 presents the Airline Booking application high-level architecture.

### Data Simulation

A simulator was created to activate those applications for a certain period of time to simulate legitimate user activity and generate data for the experiments. For each application, a unique simulator suited to the application's characteristics was created, based on Python scripts that activate functions in a logical order as would occur when a regular user uses the application. Also, actions that would simulate errors that could occur if a user was not as well-versed in the application were included.

### VOD Application:

This application consists of uploads of files into an S3 bucket. we created a staging S3 bucket that imitates a virtual "local drive" of a user that uploads video files to the source bucket of the application. The simulator uses the AWS SDK for Python (Boto3) in order to perform the cloud operations that trigger the application's workflow (Upload files to S3 buckets). In order to trigger the mailing flow, a domain was purchased via the Amazon Route 53 service and configured the Amazon SES to receive and store emails from that domain. In addition to the direct uploads via Boto3, the simulator also uses Python's email library to send emails to the domain. To simulate the accurate timing of file uploads, the "Trending YouTube Video Statistics" dataset from Kaggle was used. ¹⁰This dataset contains information about trending videos on YouTube. The distribution of the uploads of these videos was used to simulate the same distribution for the activity in the VOD application.

### Airline Booking Application:

*traffic through the website that serves as the front-end of the* application has been simulated, where the simulation has fixed probabilities for different types of booking reservations (e.g., one-way or two-way). Once the simulator completes the booking reservation, the step function within the cloud environment is triggered and starts its workflow. Within that workflow, there are error-handling mechanisms that invoke different combinations of Lambda functions. To generate additional behavior patterns for our application, we added some failure paths to the Lambda functions which are part of the error-handling process. The probability for the execution of these paths is defined in the Airline Booking application's configuration table. The total time of the simulation is dictated by the number of iterations we set before we run the script. To simulate a real-life activity across an application, we set intervals that create gaps between users' activities with respect to the time of day and the users' actions. This creates a distributed activity load that is more aligned with the real behavior of users.

### Data Description

In order to evaluate performance on the task of discovering application flows in serverless applications, the VOD and Airline Booking applications have been executed in the testbed with the simulator. The raw activity logs were collected using the AWS monitoring services (CloudTrail and CloudWatch) and divided into two distinct datasets: a video on demand application dataset and an airline booking application dataset.

### VOD Application Dataset:

This application has been executed for 21 hours, while collecting 215,369 events using the AWS monitoring services. In the activity logs, 150,810 events were associated with data access calls, and 64,568 events were related to Lambda invocations (as indicated in Table I below). The application is data-driven. The main workflow in the application is based on accessing S3 buckets and DynamoDB tables, as opposed to the Airline Booking application, in which VOD the workflow is function-driven.

### Airline Booking Application Dataset:

This application has been executed for 24 hours, while collecting 112,973 events using the AWS monitoring services. In the activity logs, 81,059 events were associated with data access calls, and 31,914 events were related to Lambda invocations (as indicated in Table I below).

**Table I**

| THE TOTAL NUMBER OF RAW LOGS COLLECTED IN THE TESTBED SIMULATION. THE LOGS WERE GROUPED BY APPLICATION (VOD AND AIRLINE BOOKING) AND EVENT TYPE (DATA ACCESS CALLS, I.E., S3 AND DYNAMODB, AND LAMBDA FUNCTION INVOCATIONS) | | |
|---|---|---|
| Application | Event Type | Number of events |
| VOD | Data access calls | 150,810 |
| | Lambda invocations | 64,586 |
| | Total | 215,396 |
| Airline | Data access calls | 81,059 |
| | Lambda invocations | 31,914 |
| | Total | 112,973 |

The structure of the applications affects the number of events during the applications' runtime.

### Ground Truth

To evaluate the detected application flows, an expert-based ground-truth dataset was manually created for each application, based on the application's architecture, source code, and documentation. Based on their roles, each entity (functions and resources) in the application was associated with a single or multiple application flows. The ground truth was created with the assistance of two experts (closely familiar with both applications), who had to agree on the application flows. The VOD application contains 33 entities divided into five application flows. The Airline Booking application contains 22 entities divided into four application flows (Table II).

**Table II**

| THE NUMBER OF ENTITIES (FUNCTIONS AND RESOURCES) FOR EACH TYPE OF APPLICATION FLOW IN THE VOD AND AIRLINE BOOKING APPLICATIONS IN THE CONSTRUCTED GROUND TRUTH | | |
|---|---|---|
| Application | Application Flow | Number of Entities |
| VOD | Publish | 10 |
| | Logging | 11 |
| | Mail | 12 |
| | Process | 9 |
| | Ingest | 10 |
| | Unique | 37 |
| | Entities | |
| Airline | Booking | 10 |
| | Loyalty | 5 |
| | Catalog | 2 |
| | Logging | 10 |
| | Unique | 25 |
| | Entities | |

### Validation:

A collection of activity logs were obtained using the VOD and Airline Booking application datasets. The activity logs were processed by extracting the source and target service from each event, and the type of operation performed by each source. A directed weighted graph has been constructed for each application based on the source and target services, where each node represents an entity (e.g., cloud services like Lambda functions or DynamoDB tables) and each edge represents the type of operation performed (e.g., Invoke, GetObject, Putltem). The weight of each edge is the number of the same operations performed between two entities (e.g., L1 Lambda performed the same GetObject operation on a DynamboDB table T1 10 times). Next, using this directed weighted graph, the Louvain community detection algorithm has been applied to group entities into disjoint communities based on their interactions. The communities detected serve as raw or initial application flows.

Since there are entities that can be associated with multiple application flows, the detection of application flows has been refined by applying three centrality measures: degree, closeness, and betweenness centrality measures. Then, for each centrality measure (calculating the importance of any given node in a network using graph theory), the top two and four central nodes that obtained the highest centrality scores in the Airline Booking and VOD application datasets were chosen, respectively. The difference in the number of top central nodes is related to the k - 1 parameter, which resembles the number of communities detected by the Louvain algorithm in each application, three and five, respectively. Then, these central nodes were added to their neighbors' communities to improve the recognition of application flows.

Finally, since both of the applications include step function services, the Lambda functions executed by each step function were added to the step function's community (if they were not already included) based on the step function's executions in the activity logs. At the end of this phase, a group of overlapping communities was obtained, each of which reflects an application flow.

### Results

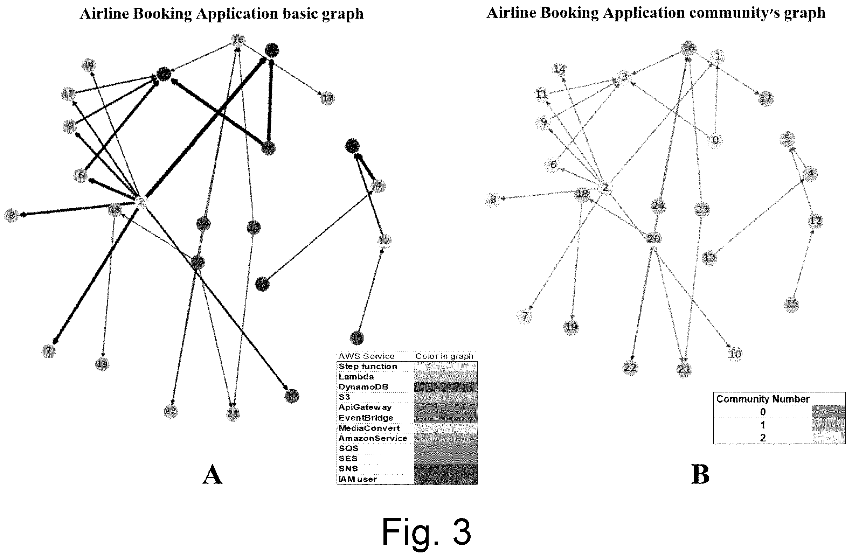

*Graph Construction:* Two directed weighted graphs were constructed based on the VOD and Airline Booking application datasets, respectively. These weighted graphs reflect the activities performed in each application by its entities (resources and functions). The graph constructed based on the VOD Application dataset contains 37 nodes and 48 edges. The graph constructed based on the Airline Booking application dataset contains 25 nodes and 28 edges (as illustrated in Fig. 3A).

The VOD application graph shows that most of the activities are dominated by several Lambda functions. Most of these Lambda functions are triggered by step functions, and in many cases, these functions interact with storage resources, such as DynamboDBs and S3s.

There are two isolated sub-graphs on the Airline Booking application graph, which represent different flows in the Airline Booking application. For example, nodes 4, 5, 12, 13, and 15 are totally isolated from the larger sub-graph, which implies independent application flows.

Fig. 4 shows the high-level architecture of the Airline Booking application, based on the original AWS repository (on the left) and the dynamic graph architecture generated by AFRISE (on the right). The original AWS architecture consists of static connections between the application's functions and resources. Since according to the present invention, the constructed graph is based on the application activity logs, it includes more connections that do not appear in the static architecture (some resources in the extended application do not appear the in original AWS architecture).

### Grouping Entities into Communities:

Using the Louvain community detection algorithm, five and three disjoint communities were revealed in the VOD and Airline Booking application graphs, respectively. Fig. 3B presented the community detection in the Airline Booking application graph. As a result, five and three main application flows were detected in the VOD and Airline Booking applications.

Upon applying the proposed method on the VOD application (by detecting disjoint communities), the overlapping NMI score of 0.511, Omega index score of 0.534, and average Jaccard similarity of 0.643 were obtained (Table III).

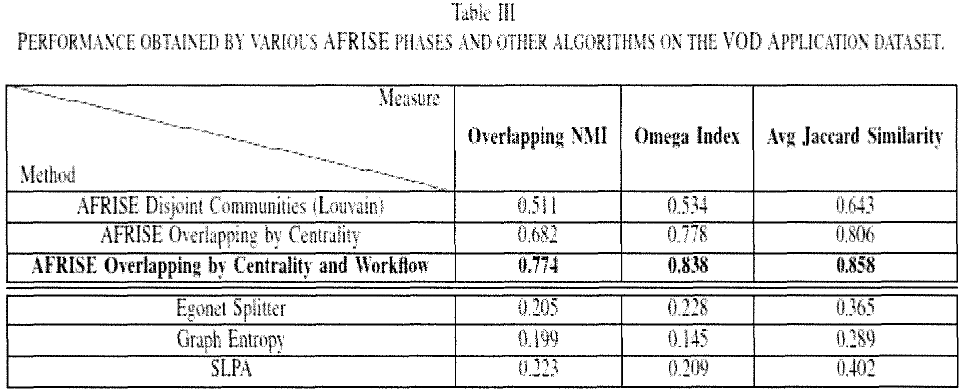

Upon applying the proposed method to the Airline Booking application, the disjoint communities that were detected obtained an overlapping NMI score of 0.785, an Omega index score of 0.866, and an average Jaccard similarity of 0.748 (Table IV).

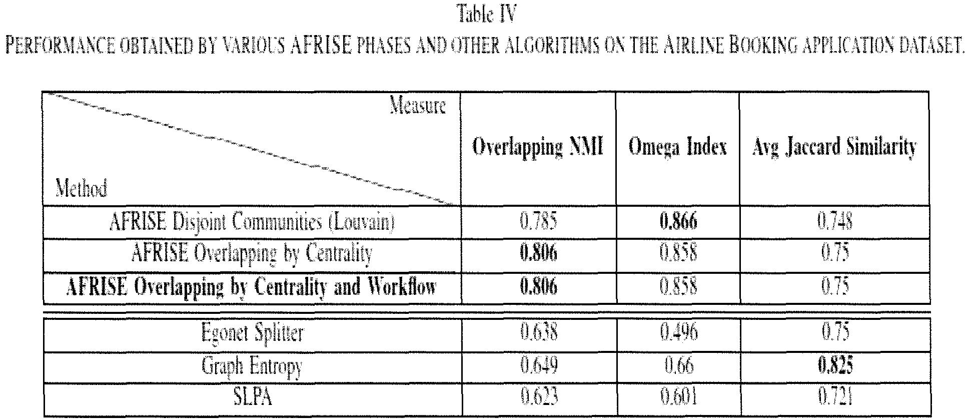

### Refining Communities by Identifying Overlapping Nodes:

### Using Centrality Measures to Identify Overlapping Nodes

Upon applying the proposed method on the VOD application (by assigning overlapping nodes to multiple communities using only nodes that were identified based on a high centrality score) an overlapping NMI score of 0.682, an Omega index score of 0.778, and an average Jaccard score of 0.806 (see Table III) were obtained. Upon applying the proposed method to the Airline Booking application (based on the overlapping communities), the overlapping NMI, Omega index, and average Jaccard similarity scores of 0.806, 0.858, and 0.75, respectively (see Table IV) were obtained.

Using centrality measures to identify overlapping nodes improved performance compared to performance, based on the application of centrality measures alone on most of the performance measures. Therefore, this step contributes to the recognition of actual application flows.

## Claims

1. A method for automatically recognizing the structure and flows of an application, comprising:
a) collecting data from managed serverless activity logs of a computational cloud provider configured to provide on-demand computing resources using distributed servers;
b) constructing an event-based graph, based on said activity logs, where each node in said event-based graph represents an entity of said application and each edge in said event-based graph represents an event being an interaction between entities or nodes;
the method being **characterised in that** it comprises:
c) recognizing application flows in said application, based on said event-based graph; and
d) identifying overlaps between the application flows, based on the event-based graph characteristics.

2. A method according to claim 1, wherein monitoring services available in the AWS cloud are used for observing the activities performed by the application.

3. A method according to claim 1, wherein the monitoring services include CloudWatch and CloudTrail.

4. A method according to claim 1, further comprising using community detection algorithms to identify groups of nodes that are closely linked, based on interactions or similarities between said groups of nodes.

5. A method according to claim 1, further comprising refining the recognition of application flows and their entities using graph-theory centrality measures to detect overlapping application flows.

6. A method according to claim 1, wherein the nodes represent an individual user or a resource, and the edge represents interaction or relationship among them.

7. A method according to claim 1, wherein the managed serverless activity logs being collected from the computational cloud provider describe entities, which are functions, resources and events of interactions between said entities.

8. A method according to claim 1, further comprising a preprocessing step that includes the extraction of the source and target service for each event and the type of operation performed by a source.

9. A method according to claim 1, wherein the application activities are reconstructed by constructing a directed weighted graph using the activity logs, by linking entities, based on their interactions,
or
wherein the centrality measures include degree, closeness, and betweenness centrality,
or
wherein the nodes are sorted according to their centrality value in descending order, or
wherein for each central node, all its neighbors and their communities are collected and each central node is added to the neighbors' communities.

10. A system for automatically recognizing the structure and flows of an application, comprising:
a) a computational cloud provider configured to provide on-demand computing resources using distributed servers;
b) a computerized device having at least one processor and operating software, being adapted to:
b.1) collect data from managed serverless activity logs of a computational cloud provider configured to provide on-demand computing resources using distributed servers;
b.2) construct an event-based graph, based on said activity logs, where each node in said event-based graph represents an entity of said application and each edge in said event-based graph represents an event being an interaction between entities or nodes; the computerized device being **characterised in that** it is adapted to:
b.3) recognize application flows in said application, based on said event-based graph; and
b.4) identify overlaps between the application flows, based on the event-based graph characteristics.

11. A system according to claim 10, wherein monitoring services available in the AWS cloud are configured to observe the activities performed by the application.

12. A system according to claim 10, wherein the monitoring services include CloudWatch and CloudTrail.

13. A system according to claim 10, in which community detection algorithms configured to identify groups of nodes that are closely linked, based on interactions or similarities between said groups of nodes.

14. A system according to claim 10, which is configured to refine the recognition of application flows and their entities using graph-theory centrality measures to detect overlapping application flows,
or
wherein the nodes represent an individual user or a resource, and the edge represents interaction or relationship among them,
or
wherein the managed serverless activity logs being collected from the computational cloud provider describe entities, which are functions, resources and events of interactions between said entities,
or
is configured to perform a preprocessing step that includes the extraction of the source and target service for each event and the type of operation performed by a source,
or
is configured to construct a directed weighted graph using the activity logs, by linking entities, based on their interactions, to thereby reconstruct the application activities,
or
wherein the centrality measures include degree, closeness, and betweenness centrality,
or
wherein the system is configured to store nodes according to their centrality value in descending order.

15. A system according to claim 14, which is configured, for each central node, to collect all its neighbors and their communities and to add each central node to the neighbors' communities.

## Patentansprüche

1. Ein Verfahren zum automatischen Erkennen der Struktur und der Abläufe einer Anwendung, umfassend:
a) Sammeln von Daten aus verwalteten serverlosen Aktivitätsprotokollen eines Cloud-Computing-Anbieters und konfiguriert, um On-Demand-Computing-Ressourcen unter Verwendung verteilter Server bereitzustellen;
b) Erstellen eines ereignisbasierten Graphen auf der Grundlage der Aktivitätsprotokolle, wobei jeder Knoten in der ereignisbasierten Graphik eine Entität der Anwendung darstellt und jede Kante in der ereignisbasierten Graphik ein Ereignis darstellt, das eine Interaktion zwischen Entitäten oder Knoten ist;
c) Erkennen von Anwendungsabläufen in der Anwendung auf der Grundlage der ereignisbasierten Graphik; und
d) Identifizieren von Überschneidungen zwischen den Anwendungsabläufen auf der Grundlage der Merkmale der ereignisbasierten Graphik.

2. Ein Verfahren nach Anspruch 1, wobei in der AWS-Cloud verfügbare Überwachungsdienste zum Beobachten der von der Anwendung ausgeführten Aktivitäten verwendet werden.

3. Ein Verfahren nach Anspruch 1, wobei die Überwachungsdienste CloudWatch und CloudTrail umfassen.

4. Ein Verfahren nach Anspruch 1, das ferner die Verwendung von Algorithmen zur Erkennung von Gemeinschaften umfasst, um Gruppen von Knoten zu identifizieren, die eng miteinander verknüpft sind, basierend auf Interaktionen oder Ähnlichkeiten zwischen den genannten Gruppen von Knoten.

5. Ein Verfahren nach Anspruch 1, das ferner das Verfeinern der Erkennung von Anwendungsabläufen und deren Entitäten unter Verwendung graphiktheoretischer Zentralitätsmaße umfasst, um überlappende Anwendungsabläufe zu erkennen.

6. Ein Verfahren nach Anspruch 1, wobei die Knoten einen einzelnen Benutzer oder eine Ressource darstellen und die Kante Interaktionen oder Beziehungen zwischen ihnen darstellt.

7. Ein Verfahren nach Anspruch 1, wobei die verwalteten serverlosen Aktivitätsprotokolle, die vom Cloud-Computing-Anbieter gesammelt werden, Entitäten beschreiben, bei denen es sich um Funktionen, Ressourcen und Ereignisse von Interaktionen zwischen den genannten Entitäten handelt.

8. Ein Verfahren nach Anspruch 1, das ferner einen Vorverarbeitungsschritt umfasst, der die Extraktion des Quell- und Zieldienstes für jedes Ereignis und die Art der von einer Quelle durchgeführten Operation umfasst.

9. Ein Verfahren nach Anspruch 1, wobei die Anwendungsaktivitäten durch Erstellen einer gerichteten gewichteten Graphik unter Verwendung der Aktivitätsprotokolle rekonstruiert werden, indem Entitäten auf der Grundlage ihrer Interaktionen verknüpft werden,
oder
wobei die Zentralitätsmaße den Grad, die Nähe und die Zwischenzentralität umfassen,
oder
wobei die Knoten entsprechend ihrem Zentralitätswert in absteigender Reihenfolge sortiert werden,
oder
wobei für jeden zentralen Knoten alle seine Nachbarn und deren Gemeinschaften gesammelt werden und jeder zentrale Knoten zu den Gemeinschaften der Nachbarn hinzugefügt wird.

10. Ein System zur automatischen Erkennung der Struktur und der Abläufe einer Anwendung, umfassend:
a) einen Cloud-Computing-Anbieter konfiguriert, um On-Demand-Computing-Ressourcen unter Verwendung verteilter Server bereitzustellen;
b) ein computergestütztes Gerät mit mindestens einem Prozessor und einer Betriebssoftware, das dazu ausgelegt ist:
b.1) Daten aus verwalteten serverlosen Aktivitätsprotokollen eines Cloud-Computing Anbieters zu sammeln und konfiguriert, um On-Demand-Computing-Ressourcen unter Verwendung verteilter Server bereitzustellen;
b.2) Erstellen einer ereignisbasierten Graphik auf der Grundlage der Aktivitätsprotokolle, wobei jeder Knoten in der ereignisbasierten Graphik eine Entität der Anwendung darstellt und jede Kante in der ereignisbasierten Graphik ein Ereignis darstellt, das eine Interaktion zwischen Entitäten oder Knoten ist, wobei das computergestützte Gerät **dadurch gekennzeichnet ist, dass** es ausgelegt ist für das;
b.3) Erkennen von Anwendungsabläufen in der Anwendung auf der Grundlage der ereignisbasierten Graphik; und
b.4) Identifizieren von Überschneidungen zwischen den Anwendungsabläufen auf der Grundlage der Merkmale der ereignisbasierten Graphik.

11. Ein System nach Anspruch 10, wobei die in der AWS-Cloud verfügbaren Überwachungsdienste so konfiguriert sind, dass sie die von der Anwendung ausgeführten Aktivitäten beobachten.

12. Ein System nach Anspruch 10, wobei die Überwachungsdienste CloudWatch und CloudTrail umfassen.

13. Ein System nach Anspruch 10, bei dem Algorithmen zur Erkennung von Gemeinschaften so konfiguriert sind, dass sie Gruppen von Knoten identifizieren, die auf der Grundlage von Interaktionen oder Ähnlichkeiten zwischen den Gruppen von Knoten eng miteinander verknüpft sind.

14. Ein System nach Anspruch 10, das so konfiguriert ist, dass es die Erkennung von Anwendungsabläufen und deren Entitäten mithilfe graphentheoretischer Zentralitätsmaße verfeinert, um überlappende Anwendungsabläufe zu erkennen,
oder
wobei die Knoten einen einzelnen Benutzer oder eine Ressource darstellen und die Kante die Interaktion oder Beziehung zwischen ihnen darstellt,
oder
wobei die verwalteten serverlosen Aktivitätsprotokolle, die vom Cloud-Computing-Anbieter gesammelt werden, Entitäten beschreiben, bei denen es sich um Funktionen, Ressourcen und Ereignisse von Interaktionen zwischen den genannten Entitäten handelt,
oder
so konfiguriert ist, dass es einen Vorverarbeitungsschritt durchführt, der die Extraktion des Quell- und Zieldienstes für jedes Ereignis und die Art der von einer Quelle durchgeführten Operation umfasst,
oder
so konfiguriert ist, dass es unter Verwendung der Aktivitätsprotokolle eine gerichtete gewichtete Graphik erstellt, indem es Entitäten auf der Grundlage ihrer Interaktionen miteinander verknüpft, um dadurch die Anwendungsaktivitäten zu rekonstruieren,
oder
wobei die Zentralitätsmaße den Grad, die Nähe und die Zwischenzentralität umfassen,
oder
wobei das System so konfiguriert ist, dass es Knoten entsprechend ihrem Zentralitätswert in absteigender Reihenfolge speichert.

15. Ein System nach Anspruch 14, das so konfiguriert ist, dass es für jeden zentralen Knoten alle seine Nachbarn und deren Gemeinschaften erfasst und jeden zentralen Knoten zu den Gemeinschaften der Nachbarn hinzufügt.

## Revendications

1. Procédé de reconnaissance automatiquement de la structure et des flux d'une application, comprenant :
a) collecter les données de journaux d'activité sans serveur gérés d'un fournisseur de nuage informatique configuré pour fournir des ressources informatiques à la demande en utilisant des serveurs distribués ;
b) construire un graphe basé sur un événement, sur la base desdits journaux d'activité, où chaque nœud dans ledit graphe basé sur un événement représente une entité de ladite application et chaque bord dans ledit graphe basé sur un événement représente un événement qui est une interaction entre des entités ou des nœuds ;
le procédé étant **caractérisé en ce qu'**il comprend :
c) reconnaître des flux d'application dans ladite application, sur la base dudit graphe basé sur un événement ; et
d) identifier des chevauchements entre les flux d'application, sur la base des caractéristiques du graphe basé sur un événement.

2. Procédé selon la revendication 1, dans lequel des services de surveillance disponibles dans le nuage AWS sont utilisés pour observer les activités exécutées par l'application.

3. Procédé selon la revendication 1, dans lequel les services de surveillance incluent CloudWatch et CloudTrail.

4. Procédé selon la revendication 1, comprenant en outre l'utilisation d'algorithmes de détection de communautés pour identifier des groupes de nœuds qui sont étroitement liés, sur la base des interactions ou des similitudes entre lesdits groupes de nœuds.

5. Procédé selon la revendication 1, comprenant en outre l'affinage de la reconnaissance des flux d'application et de leurs entités en utilisant des mesures de centralité dans la théorie des graphes pour détecter des flux d'application chevauchants.

6. Procédé selon la revendication 1, dans lequel les nœuds représentent un utilisateur ou une ressource individuel(le), et le bord représente l'interaction ou la relation entre eux.

7. Procédé selon la revendication 1, dans lequel les journaux d'activité sans serveur gérés qui sont collectés à partir du fournisseur de nuage informatique décrivent des entités, qui sont des fonctions, des ressources et des événements d'interactions entre lesdites entités.

8. Procédé selon la revendication 1, comprenant en outre une étape de prétraitement qui inclut l'extraction du service source et cible pour chaque événement et du type d'opération exécuté par une source.

9. Procédé selon la revendication 1, dans lequel les activités d'application sont reconstruites en construisant un graphe pondéré dirigé utilisant les journaux d'activité, en liant les entités, sur la base de leurs interactions, ou
dans lequel les mesures de centralité incluent la centralité de degré, de proximité, et d'intermédiarité, ou
dans lequel les nœuds sont triés selon leur valeur de centralité par ordre descendant, ou
dans lequel pour chaque nœud central, tous ses voisins et leurs communautés sont collectés et chaque nœud central est ajouté aux communautés de voisins.

10. Système de reconnaissance automatiquement de la structure et des flux d'une application, comprenant :
a) un fournisseur de nuage informatique configuré pour fournir des ressources informatiques à la demande en utilisant des serveurs distribués ;
b) un dispositif informatique ayant au moins un processeur et un logiciel d'exploitation, étant adapté pour :
b.1) collecter des données de journaux d'activité sans serveur gérées d'un fournisseur de nuage informatique configuré pour fournir des ressources informatiques à la demande en utilisant des serveurs distribués ;
b.2) construire un graphe basé sur un événement, sur la base desdits journaux d'activité, où chaque nœud dans ledit graphe basé sur un événement représente une entité de ladite application et chaque bord dans ledit graphe basé sur un événement représente un événement qui est une interaction entre des entités ou des nœuds ;
le dispositif informatique étant **caractérisé en ce qu'**il est adapté pour :
b.3) reconnaître des flux d'application dans ladite application, sur la base dudit graphe basé sur un événement ; et
b.4) pour identifier des chevauchements entre les flux d'application, sur la base des caractéristiques du graphe basé sur un événement.

11. Système selon la revendication 10, dans lequel des services de surveillance disponibles dans le nuage AWS sont configurés pour observer les activités exécutées par l'application.

12. Système selon la revendication 10, dans lequel les services de surveillance incluent CloudWatch et CloudTrail.

13. Système selon la revendication 10, dans lequel des algorithmes de détection de communautés configurés pour identifier des groupes de nœuds qui sont étroitement liés, sur la base des interactions ou des similitudes entre lesdits groupes de nœuds.

14. Système selon la revendication 10, qui est configuré pour affiner la reconnaissance de flux d'application et leurs entités en utilisant des mesures de centralité dans la théorie des graphes pour détecter des flux d'application chevauchants,
ou
dans lequel les nœuds représentent un utilisateur ou une ressource individuel(le), et le bord représente l'interaction ou la relation entre eux,
ou
dans lequel les journaux d'activité sans serveur gérés qui sont collectés à partir du fournisseur de nuage informatique décrivent des entités, qui sont des fonctions, des ressources et des événements d'interactions entre lesdites entités, ou
est configuré pour exécuter une étape de prétraitement qui inclut l'extraction du service source et cible pour chaque événement et du type d'opération exécuté par une source,
ou
est configuré pour construire un graphe pondéré dirigé en utilisant les journaux d'activité, en liant les entités, sur la base de leurs interactions, pour reconstruire ainsi les activités d'application,
ou
dans lequel les mesures de centralité incluent la centralité par degré, de proximité, et d'intermédiarité,
ou
dans lequel le système est configuré pour stocker des nœuds selon leur valeur de centralité par ordre descendant.

15. Système selon la revendication 14, qui est configuré, pour chaque nœud central, pour collecter tous ses voisins et leurs communautés et pour ajouter chaque nœud central aux communautés de voisins.
